# FASCICULE DE BREVET EUROPEEN

(11) **EP 2 764 566 B1**
(45) Date de publication et mention de la délivrance du brevet: **15.03.2017**
(21) Numéro de dépôt: 12775817.5
(22) Date de dépôt: 04.10.2012
(51) Int. Cl.: H01M 4/62, H01M 4/04, H01M 10/0525, H01M 4/131, H01M 4/139, H01M 4/1391

(54) **PROCÈDE DE PRÉPARATION D'ÉLECTRODES FLEXIBLES AUTO SUPPORTÉES**
VERFAHREN ZUR HERSTELLUNG SELBSTTRAGENDER BIEGSAMER ELEKTRODEN
METHOD FOR PREPARING FLEXIBLE SELF-SUPPORTED ELECTRODES

(30) Priorité: 06.10.2011 FR 1159046
(43) Date de publication de la demande: 13.08.2014
(73) Titulaire: Institut Polytechnique de Grenoble, 38031 Grenoble Cedex (FR); Centre National de la Recherche Scientifique, 75016 Paris (FR)
(72) Inventeur: JABBOUR, Lara, F-38000 Grenoble (FR); CHAUSSY, Didier, F-38320 Brie Et Angonnes (FR); BENEVENTI, Davide, F-38400 Saint Martin D'heres (FR); DESTRO, Matteo, I-10134 Torino (IT); BODOARDO, Silvia, I-10141 Torino (IT); GERBALDI, Claudio, I-10139 Torino (IT); PENAZZI, Nerino, I-13100 Vercelli (IT)
(74) Mandataire: Goulard, Sophie
(86) Numéro de dépôt international: PCT/FR2012/052256
(87) Numéro de publication internationale: WO 2013/050713

(56) Documents cités:
- EP-A2- 0 028 879
- DE-A1- 10 163 389
- US-A1- 2011 183 180
- GOMEZ CAMER J L ET AL: "Nanosized Si/cellulose fiber/carbon composites as high capacity anodes for lithium-ion batteries: A galvanostatic and dilatometric study", ELECTROCHIMICA ACTA, ELSEVIER SCIENCE PUBLISHERS, BARKING, GB, vol. 54, no. 26, 1 novembre 2009 (2009-11-01), pages 6713-6717, XP026546248, ISSN: 0013-4686, DOI: 10.1016/J.ELECTACTA.2009.06.085 [extrait le 2009-07-04]

## Description

La présente invention se rapporte au domaine des batteries Lithium-ions (Li-ion) flexibles. En particulier, la présente invention concerne un procédé pour la préparation d'une composition d'électrode flexible autosupportée ne nécessitant ni l'emploi d'un liant polymère synthétique ni celui de solvants organiques. L'invention concerne également une électrode composite flexible négative ou positive obtenue par la mise en oeuvre dudit procédé, ainsi qu'une batterie lithium-ion comprenant au moins une telle électrode flexible.

Les batteries Li-ion flexibles peuvent être utilisées, tout comme les batteries Li-ion classiques, dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). De manière générale, les batteries flexibles peuvent être utilisées dans toutes les applications où il est souhaitable que la batterie puisse se déformer ou se plier afin par exemple de remplir des espaces vides dans des voitures hybrides ou électriques ou d'alimenter des dispositifs électroniques pliables autre que dans toutes les applications classiques des batteries Li-ion rigides.

Une batterie lithium-ion (Li-ion) classique comprend au moins une électrode négative (anode) et au moins une électrode positive (cathode) entre lesquelles est placé un électrolyte solide ou un séparateur imprégné par un électrolyte liquide. L'électrolyte liquide est par exemple constitué d'un sel de lithium en solution dans un solvant choisi pour optimiser le transport et la dissociation des ions. En particulier, dans une batterie lithium-ion, chacune des électrodes comprend généralement un collecteur de courant (substrat en métal) sur lequel est déposé un matériau composite qui comprend une matière active vis-à-vis du lithium, un polymère qui joue le rôle de liant (par exemple un copolymère du fluorure de vinylidène (PVdF)), un agent conférant une conductivité électronique (tel que par exemple du noir de carbone) et un solvant.

Au cours du fonctionnement de la batterie, des ions lithium passent de l'une des électrodes à l'autre à travers l'électrolyte. Lors de la décharge de la batterie, une quantité de lithium réagit avec la matière active d'électrode positive à partir de l'électrolyte, et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Le fonctionnement des batteries Li-ion flexibles est le même que celui susmentionné pour les batteries Li-ion classiques. Cependant, afin d'obtenir une batterie flexible ou pliable, il convient de développer, en sus, des électrodes présentant non seulement une forte conductivité, mais aussi dans lesquelles la couche de matière active présente une forte adhésion au substrat, ce qui permet d'éviter l'apparition de fissures, voire le décollement de la matière active après flexion de la batterie, ou préférablement de développer des électrodes autosupportées qui ne nécessitent pas l'utilisation d'un substrat métallique.

Divers procédés de fabrication d'électrodes flexibles ont été proposés dans la littérature. En particulier, des anodes présentant une flexibilité améliorée ont été obtenues par filtration de suspensions de nanotubes de carbone [S.Y.S. Chew, et al., Carbon, 2009, 47, 2976-2983], par ablation laser pulsé de silicium sur des films de nanotubes de carbone [S. Chou, et al., The Journal of Physical Chemistry, 2010, C 114, 15862-15867] ou bien encore par laminage de flocons de graphite afin d'obtenir des feuilles de graphite utilisées en tant qu'anode [M. Yacizi, et al., Journal of Power Sources, 2005, 141, 171-176]. Cependant, les procédés développés ci-dessus présentent des inconvénients : ils nécessitent l'emploi de matières premières couteuses, ils sont longs à mettre en oeuvre et consomment beaucoup d'énergie ou, dans quelques cas, les électrodes préparées présentent de faibles propriétés électrochimiques par rapport aux électrodes traditionnelles.

L'utilisation d'anodes composites nano-Si/cellulose comprenant des fibres de cellulose en tant que charge inerte et montrant une bonne stabilité électrochimique a également déjà été proposée [J.L.G Camer, et al., Electrochimica Acta, 2009, 54, 6713-6717]. Cependant, les anodes composites de cette publication ont été préparées en utilisant un solvant organique. En outre, les caractéristiques mécaniques n'ont pas été déterminées et l'application de ces électrodes dans une batterie flexible Li-ion n'apparaît pas envisageable.

En outre, un liant polymère synthétique et un solvant organique sont généralement utilisés pour la fabrication des électrodes. Toutefois, ces composés ne sont pas très respectueux de l'environnement. Or, la tendance actuelle est, au contraire, de trouver des techniques de production qui aient un impact le plus faible possible sur le plan environnemental et d'obtenir des dispositifs/des batteries qui soient facilement recyclables.

Pour remédier à ces inconvénients, il a été récemment démontré que de la cellulose microfibrillée dispersée dans de l'eau peut être utilisée en tant que liant pour la fabrication d'électrodes à base de graphite par coulage d'une suspension de graphite et de cellulose microfibrillée dans un moule et élimination de l'eau par évaporation. Ce procédé évite ainsi l'utilisation de polymères synthétiques, de solvants organiques et de substrats métalliques. Toutefois, la faible vitesse d'évaporation de l'eau et la haute consommation d'énergie requise pour produire la cellulose microfibrillée constituent un frein pour la fabrication de ces électrodes à l'échelle industrielle [L. Jabbour, et al., J. Mater. Chem., 2010, 20, 7344-7347].

Il a en outre été proposé de préparer un matériau composite en cellulose microfibrillée (produite par une algue *Clodophora*)/polypyrrole (PPy) pour la fabrication de batteries flexibles entièrement à base de matériaux organiques. Cependant, les faibles densités d'énergie massique (25 Wh/kg) et d'énergie volumique (40 Wh/L) des batteries ainsi obtenues (NaCl-PPy) ne permettent pas une comparaison directe avec les batteries Lithium-ion, que ce soit en termes de performance électrochimique que des applications visées. Le document DE10163389 décrit un procédé de fabrication d'une électrode pour batterie Zinc-Air comprenant des particules de matière active d'électrode et des fibres cellulosiques déposées sur un collecteur de courant.

Par conséquent, il n'existe pas dans l'art antérieur de procédé de préparation d'électrodes flexibles pour batteries Li-ion qui soit simple, peu onéreux et respectueux de l'environnement tout en permettant la réalisation de batteries Li-ion présentant de bonnes performances électrochimiques.

Le but de la présente invention est de fournir :
- une composition pour l'élaboration d'une électrode flexible, négative ou positive, destinée à être utilisée dans une batterie lithium-ion,
- un procédé d'élaboration d'une telle électrode flexible,
- une batterie Li-ion comprenant au moins une telle électrode flexible.

En particulier, le but de la présente invention est de fournir un procédé de préparation d'électrodes flexibles qui évite, tout ou en partie, les inconvénients précités.

La présente invention a donc pour premier objet un procédé de préparation d'une électrode flexible autosupportée comprenant au moins une matière active d'électrode, et au moins un liant, ledit procédé comportant au moins les étapes suivantes :
i) une étape de préparation d'une pâte aqueuse par dispersion d'un mélange de particules solides dans une phase aqueuse, ledit mélange de particules solides comprenant :
   - au moins une matière active d'électrode, en une quantité variant de 50 à 98% en masse par rapport à la masse totale du mélange de particules solides,
   - au moins un liant comprenant des fibres de cellulose raffinées, en une quantité variant de 2 à 50 % en masse par rapport à la masse totale du mélange de particules solides ;
   ledit mélange de particules solides représentant au moins 0,02 % en masse de la masse totale de la pâte aqueuse ;
ii) une étape de filtration de la pâte aqueuse obtenue ci-dessus à l'étape i) sur une toile de filtration ;
iii) éventuellement une étape de pressage à l'état humide de la pâte aqueuse puis son transfert sur un feutre de séchage ;
iv) une étape de séchage pour obtenir une feuille d'électrode flexible sèche supportée par la toile de filtration ou par le feutre de séchage lorsque l'étape iii) a été réalisée ;
v) une étape de séparation entre la feuille d'électrode et la toile de filtration ou le feutre de séchage lorsque l'étape iii) a été réalisée, pour obtenir l'électrode flexible autosupportée.

La société Demanderesse a ainsi découvert et ce, de manière surprenante, un procédé simple, peu onéreux et respectueux de l'environnement permettant de préparer à la fois des électrodes fines et flexibles et des batteries Li-ion flexibles. Pour cela, le liant de l'électrode est en fibres de cellulose raffinées. Ces dernières permettent en effet d'emprisonner de façon homogène la matière active de l'électrode tout en lui conférant une meilleure résistance à la flexion. De plus, l'utilisation de telles fibres conduit à une électrode avec d'excellentes propriétés mécaniques tout en conservant de bonnes performances électrochimiques. Le procédé de filtration est rapide, à base d'une phase liquide telle que de l'eau, et exempt de polymères synthétique ou de solvant organique. Ce procédé est facilement adaptable à l'échelle industrielle. En outre, comme cela sera démontré dans les exemples illustrant la présente demande, les demi-cellules d'anodes préparées conformément au procédé de l'invention montrent de très bonnes capacités de charge/décharges spécifiques et de bonnes performances cycliques comparées aux résultats cités dans la littérature ou obtenus avec une anode de référence à base de poudre de graphite synthétique (GP) et d'un liant polymère tel que le polyfluorure de vinylidène (PVdF).

Selon l'invention, on entend par fibres de celluloses raffinées, des fibres de cellulose ayant un degré Schopper-Riegler (°SR) variant de 30 à 95°SR environ. Cette caractéristique physique est issue de l'industrie du papier et permet de quantifier le degré de raffinage des fibres de cellulose. Le raffinage se mesure donc en degrés Schopper-Riegler (°SR), ce qui correspond à un indice d'égouttage (plus une pâte retient l'eau, plus elle est raffinée). Le degré de raffinage Schopper-Riegler est déterminé par une mesure de l'égouttabilité de la pâte selon la méthode décrite dans la norme ISO 5267. L'essai Schopper-Riegler est conçu pour donner la mesure de la vitesse à laquelle l'eau peut être extraite d'une suspension de pâte diluée. Il a été démontré que l'égouttabilité est fonction de l'état de la surface et du gonflement des fibres, et qu'elle constitue un indice représentatif de l'intensité du traitement mécanique subi par la pâte.

Selon une forme de réalisation préférée de l'invention, les fibres de cellulose raffinées (FBr) peuvent être obtenues selon un procédé de raffinage comportant les étapes suivantes :
a) une étape de dispersion, dans un milieu aqueux, de fibres de cellulose préalablement séchées, pour obtenir une pâte de fibres de cellulose dans laquelle la teneur en fibres de cellulose varie de 1 à 15 % en masse par rapport à la masse totale de ladite pâte de fibres de cellulose ;
b) une étape de cisaillement de ladite pâte de fibres de cellulose, de sorte à obtenir des fibres de cellulose raffinées, c'est-à-dire des fibres de cellulose présentant un degré Schopper-Riegler variant de 30 à 95°SR environ.

Comme dans le domaine de l'industrie du papier, l'étape de raffinage selon la présente invention est un traitement mécanique des fibres de cellulose en vue d'obtenir leur hydratation (étape a)), leur fibrillation et leur raccourcissement ainsi que la création d'éléments fins (étape b)).

L'étape de mise en suspension (étape a) dure en général entre 10 et 20 min et est réalisée à l'aide de disperseurs dits à faible concentration (rotor à turbine) ou haute concentration (rotor hélicoïdal). A l'issue de l'étape a), la matière première se présente sous forme d'une pâte de fibres cellulosiques dispersées dans l'eau. La concentration en fibres dans ladite pâte est de l'ordre de 1 à 15 % en masse (selon le type de pulpeur utilisé pour la mise en suspension). Avant la réalisation de l'étape b) de cisaillement, la concentration de la pâte de fibres cellulosiques est éventuellement ajustée pour ne pas dépasser 5 % en masse.

L'étape b) de cisaillement peut notamment être réalisée dans l'entrefer d'une machine tournante telle que par exemple un raffineur conventionnel à cônes, à disques ou à tambour tel qu'un raffineur de type Valley. L'entrefer est l'espace, de quelques centaines de microns, existant entre les surfaces de lames en vis-à-vis, disposées sur des disques (ou des cylindres ou cônes) en mouvement relatif. Pendant quelques millisecondes, les fibres y subissent à la fois une compression et un cisaillement.

Ainsi, pendant cette étape de cisaillement, la morphologie des fibres de cellulose change et passe d'une forme cylindrique compacte (forme initiale) à une structure en forme de chevelure en désordre. L'étape de cisaillement (raffinage) implique en effet une libération de fibrilles par rupture partielle des parois. En outre, cette étape permet d'améliorer le degré de liaison des fibres de cellulose et ainsi, les propriétés mécaniques des électrodes les incorporant.

Selon une forme de réalisation préférée de l'invention, l'étape b) de cisaillement est conduite jusqu'à ce que les fibres de cellulose raffinées (FBr) présente un degré d'au moins 30°SR, plus préférentiellement d'au moins 60 °SR, de manière encore plus préférée d'au moins 80°SR.

La quantité de fibres de celluloses utilisée lors de l'étape i) du procédé conforme à l'invention varie de préférence de 2 à 50% en masse environ par rapport à la masse totale du mélange de particules solides.

La phase aqueuse est de préférence constituée par de l'eau.

De préférence, un agent anti-floculation des fibres est incorporé à la suspension aqueuse de l'étape i). Cet agent anti-floculation, outre le fait d'éviter la floculation des fibres de cellulose durant la filtration, permet d'améliorer l'homogénéité et la résistance mécanique des électrodes sèches ainsi que leur conductivité électronique. Un agent anti-floculation convenant pour la présente invention peut être de la carboxyméthylcellulose (CMC), de l'amidon ou l'un de leurs dérivés ou mélanges. Lorsqu'il est utilisé, l'agent anti-floculation des fibres représente de préférence de 0,01 à 10 % en masse environ, et encore plus préférentiellement de 0,05 % à 1 % en masse environ par rapport à la masse totale de la pâte aqueuse de l'étape i).

La suspension aqueuse de l'étape i) peut en outre renfermer au moins un agent générant une conductivité électronique. L'agent générant une conductivité électronique convenant pour la présente invention est de préférence choisi parmi le noir de carbone, le carbone SP, le noir d'acétylène, les fibres et nanofibres de carbone, les nanotubes de carbone, les particules et fibres métalliques et l'un de leurs mélanges. Lorsqu'il est utilisé, l'agent générant une conductivité électronique représente généralement de 0,1 à 50 % en masse, de préférence de 5 à 30 % environ en masse, par rapport à la masse totale de matière sèche.

La matière active d'électrode se présente de préférence sous forme de particules de dimension moyenne inférieure à 200 µm, de préférence de dimensions inférieure à 100 µm et de manière encore plus préférée de inférieure 50 µm.

Selon une forme de réalisation particulière et préférée du procédé conforme à l'invention, la concentration massique du mélange de particules solides dans la suspension aqueuse à l'issue de l'étape i) varie de 0,02 à 5 % environ, de préférence de 0,05 à 2 et encore plus préférentiellement de 0,1 à 1,5 %.

Pour l'étape ii), il convient de préférence d'utiliser un seuil de filtration de l'ordre de 1 à 100 µm environ, et encore plus préférentiellement de l'ordre de 10 à 50 µm La filtration peut par exemple être réalisée à l'aide de filtres papier, de membranes polymères ou de toiles (polymères ou métalliques) présentant le seuil de filtration adapté. La durée et l'efficacité du procédé de filtration peuvent varier en fonction de la composition de la suspension aqueuse et le seuil de filtration.

Les étapes de filtration, de pressage à l'état humide et de séchage sont effectuées en séquence. L'étape de séchage est généralement réalisée à une température de 50 à 150°C, de préférence de 80 à 120 °C et encore plus préférentielle de 90 à 110°C, de préférence sous vide pour favoriser l'élimination d'eau.

Une électrode flexible autosupportée selon la présente invention est obtenue selon le procédé tel que décrit ci-dessus et constitue un autre objet de la présente invention. Elle est caractérisée en ce qu'elle comprend au moins une matière active d'électrode, éventuellement au moins un agent générant une conductivité électrique, éventuellement un agent anti-floculation des fibres et au moins un liant comprenant des fibres de cellulose raffinées (FBr) emprisonnant ladite matière active d'électrode.

Une électrode positive flexible selon l'invention est obtenue selon le procédé susmentionné. La matière active pouvant convenir à ladite électrode positive peut être choisie parmi les particules de matière cathodique compatibles avec un milieu aqueux et avec un diamètre < 200 µm, de préférence < 100 µm et encore plus préférentiellement < 50 µm. Des exemples de matières cathodiques pouvant être utilisées dans la présente invention sont : LiₓMn_{y}O₄ (0<x<2, 0<y<2 et x+y=3), LiCoO₂, LiMPO₄, (M = Fe, Mn, Co, Ni), LiAlₓCo_{y}Ni_{z}O₂ (0<x<1, 0<y<1, 0<z<1 et x+y+z=1), LiNi_{(1-y)}Co_{y}O₂(0≤y≤1), etc....

Une électrode négative flexible selon l'invention est obtenue selon le procédé susmentionné. La matière active pouvant convenir à ladite électrode négative peut être choisie parmi les particules de matière anodique compatibles avec l'eau et avec un diamètre < 200 µm, de préférence < 100 µm et encore plus préférentiellement < 50 µm. Des exemples de matières anodiques sont : le graphite, le carbone dur, le carbone mou, les alliages métallique du type Li_{Y}M (1<y<5 et M = Mn, Sn, Pb, Si, In, Ti) etc....

Selon une forme de réalisation préférée de l'invention l'électrode flexible autosupportée a une épaisseur variant de 50 à 300 µm et encore plus préférentiellement, de 80 à 150 µm.

Une batterie lithium-ion flexible comprenant au moins une électrode flexible autosupportée selon la présente invention constitue un autre objet de la présente invention.

Une batterie lithium-ion flexible selon la présente invention comprend au moins une électrode négative et au moins une électrode positive entre lesquelles est placé un électrolyte solide (polymère ou vitreux) ou un séparateur imprégné par un électrolyte liquide. Elle est caractérisée en ce que l'électrode positive et/ou électrode négative est une électrode flexible autosupportée selon l'invention.

L'électrolyte convenant pour la présente invention peut être constitué d'un sel de lithium en solution dans un solvant choisi pour optimiser le transport et la dissociation des ions. Le sel de lithium peut être choisi par exemple parmi LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃, LiN(SO₂CF₃)₂, et LiN(SO₂F)₂.

Le solvant peut être un solvant liquide comprenant un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de diéthyle et le carbonate de méthyle et d'éthyle.

Le séparateur peut être du simple papier avec une porosité contrôlé, imbibé d'électrolyte liquide tel que décrit ci-dessus.

L'électrolyte solide peut également être choisi parmi un polymère en gel thermo/photo durci à base par exemple de méthacrylique.

Selon une forme de réalisation préférée de l'invention, la batterie flexible est caractérisée en ce que chacune des électrodes est une électrode flexible autosupportée conforme à l'invention, lesdites électrodes étant séparées l'une de l'autre par une feuille de papier imprégnée d'électrolyte liquide. Ainsi la batterie flexible selon l'invention constitue une batterie « tout papier » et sera elle-même recyclable et respectueuse de l'environnement.

La présente invention est illustrée par les exemples ci-après, auxquels elle n'est cependant pas limitée.

Les matières premières utilisées dans les exemples, sont listées ci-après :
- Poudre de graphite synthétique (GP) présentant une dimension moyenne de particule inférieure à 20 µm ;
- Carboxyméthylcellulose (CMC) de masse moléculaire moyenne en poids Mw de 90 000 g.mol⁻¹ ;
- N-méthyl-2-pyrrolidinone (NMP) et Hexafluorophosphate de lithium (LiPF₆) ;
- Polyfluorure de vinylidène (PVdF) ;
- Carbonate d'éthylène (EC) et Carbonate de diéthyle (DEC), qualité batterie (« *grade battez »*) ;
- Fibres de cellulose (FB) de bois de feuillus blanchies,

Excepté pour les fibres de cellulose, tous les matériaux ont été utilisés tels que reçus.
- Lithium fer phosphate (LiFePO₄),
- Noir de carbone (CB),
- Sulfate d'aluminium hydraté : Al₂(SO₄)₃•13,4-14,5H₂O.

### Exemple 1

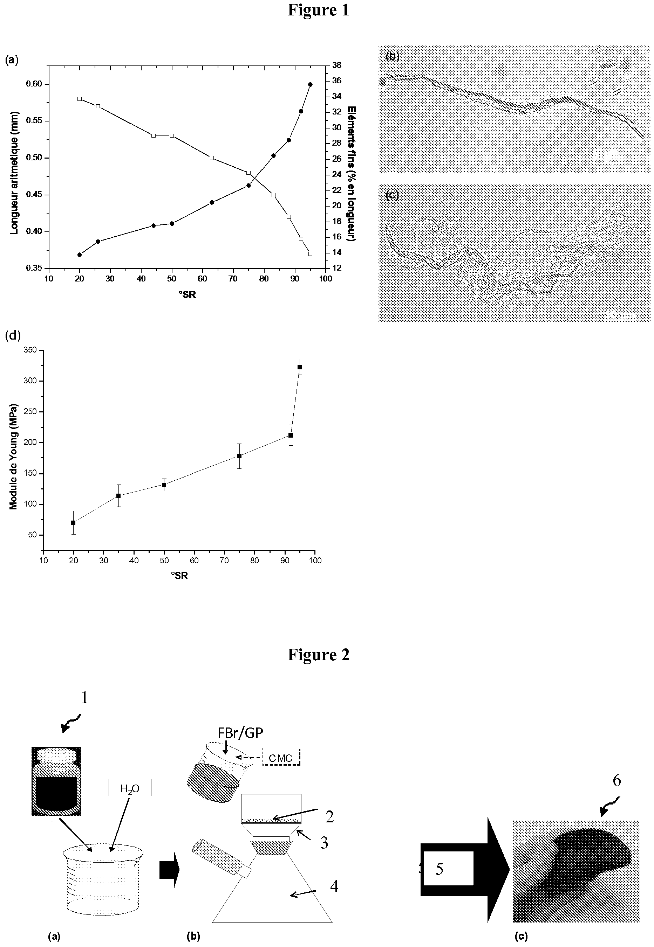

### Préparation des fibres de cellulose raffinées et caractérisations (Figure 1)

440 g de fibres de cellulose (FB) séchées ont été hydratées dans 22 L d'eau pendant 24 h, puis transformées en pâte pendant 20 minutes dans un disperseur Lhomargy®, de sorte à obtenir une suspension de fibres de cellulose. Cette étape produit une fibrillation externe des fibres qui provoque une amélioration des caractéristiques de liaison des fibres. La suspension aqueuse a ensuite été cisaillée (raffinée) dans un raffineur de type Valley selon la norme standard ISO 5264.

Le degré de raffinage (indice de raffinage ou d'égouttage) a été évalué aux moyens des mesures d'égouttage en accord avec la norme standard ISO 5267 et est exprimé en degré Shopper-Riegler (°SR). Les effets du raffinage sur la morphologie des fibres ont été observés en utilisant un microscope optique (OM) (Axio Imager M1m Zeiss) et un analyseur de la morphologie des fibres Morfi (TecPap) qui a également été utilisé pour quantifier la fraction de fines particules présentes dans la suspension de fibres induites par l'étape de raffinage. Les fibres présentant un degré de raffinage situé entre 20 (fibres non raffinées) et 95°SR ont été utilisées pour la préparation des électrodes qui vont servir pour les tests de caractérisation.

La figure 1 montre l'effet de l'étape de raffinage sur les fibres de cellulose. En particulier, la figure 1a est un graphique représentant la longueur moyenne des fibres de cellulose et la proportion des fines particules (% en longueur) en fonction de l'augmentation de degré de raffinage °SR. La courbe avec les ronds pleins correspond à l'évolution du pourcentage en longueur des éléments fins et la courbe avec les carrés vides correspond à l'évolution de la longueur arithmétique des fibres. Cette figure la montre ainsi que durant le traitement de raffinage, à savoir pendant l'augmentation du degré °SR, la proportion des particules fines augmente progressivement tandis que la longueur moyenne des fibres décroît. Ceci est concordant avec le coupage caractéristique des longues fibres qui a lieu durant le raffinage intensif pour la fabrication classique de papier. Les figures 1b et 1c sont respectivement des images observées au microscope optique d'une fibre de cellulose non raffinée et d'une fibre de cellulose présentant un degré de raffinage de 95°SR. Ces figures montrent que l'étape de raffinage induit un changement radical dans la morphologie de la fibre. En effet, la forme cylindrique compacte des fibres non raffinées de la figure 1b se transforme en une structure en forme de chevelure en désordre (figure 1c), indiquant ainsi que la fibre coupée (lors du raffinage) est accompagnée par une micro-fibrillation externe, à savoir une libération de fibrilles par rupture partielle des parois soumises lors de l'étape de raffinage. Enfin, la figure 1d se réfère à des électrodes préparées avec 25% en masse de fibres de cellulose raffinées à différents degrés de raffinage °SR et 75% en masse de graphite et donne les résultats de la mesure du module de Young pour chacune des électrodes ainsi préparées. Sur cette figure, l'évolution du module de Young (module d'élasticité) de l'électrode (MPa) est exprimée en fonction du degré de raffinage des fibres de cellulose (°SR). Cette figure 1d montre ainsi que les électrodes préparées avec des fibres de cellulose hautement raffinées sont plus homogènes et présentent une meilleure résistance à la flexion que celles préparées avec des fibres de cellulose peu raffinées. En effet, le raffinage des fibres de cellulose permet d'obtenir des électrodes flexibles sans toutefois qu'elles se brisent ou s'effritent.

### Exemple 2

### Préparation de plusieurs électrodes négatives (anodes) et caractérisations

Les fibres de cellulose (FBr) raffinées obtenues à l'exemple 1 avec un degré Shopper Riegler de 95°SR et des particules de graphite (GP) ont été dispersées dans de l'eau par agitation mécanique afin d'obtenir une pâte épaisse comprenant 2 % en masse d'un mélange de particules solides comprenant, selon les préparations d'anodes, 10 %, 15 %, 20% ou 30 % en masse de fibres (FBr) par rapport la masse totale du mélange de particules solides.

Avant de filtrer cette solution épaisse aqueuse, 1% en masse de CMC, par rapport à la masse des fibres séchées, y a été ajouté et ce, afin de limiter la floculation des fibres pendant la filtration et d'améliorer l'homogénéité de l'anode.

Des anodes ont également été préparées sans utiliser de CMC.

Suite à cette première étape, un mélange 1 (figure 2a) comprenant 2 % en masse de particules solides comprenant les éléments FBr/GP et éventuellement de la CMC a été obtenu.

Ensuite, tel que schématisé sur la figure 2, 19 g du mélange 1 à 2 % en masse de FBr/GP (comprenant également éventuellement selon les préparations de la CMC) ont été dilués dans 400 mL d'eau et filtrés sous vide en utilisant un entonnoir 3, un flacon Büchner 4 et un papier filtre 2 de 90 mm de diamètre avec un seuil de filtration de 8 à 12 µm.

Les préparations d'anodes filtrées sous vide se trouvant sur le papier filtre ont ensuite été pressées et séchées sous vide pendant 10 minutes à 90°C (étape référencée 5 sur la figure 2).

Ainsi, pour chaque préparation, une feuille autosupportée 6 de FBr/GP et comprenant éventuellement de la CMC a été obtenue. Celle-ci a ensuite été détachée du papier filtre et entreposée sous conditions contrôlées de température et d'humidité (23°C, 50% d'humidité relative).

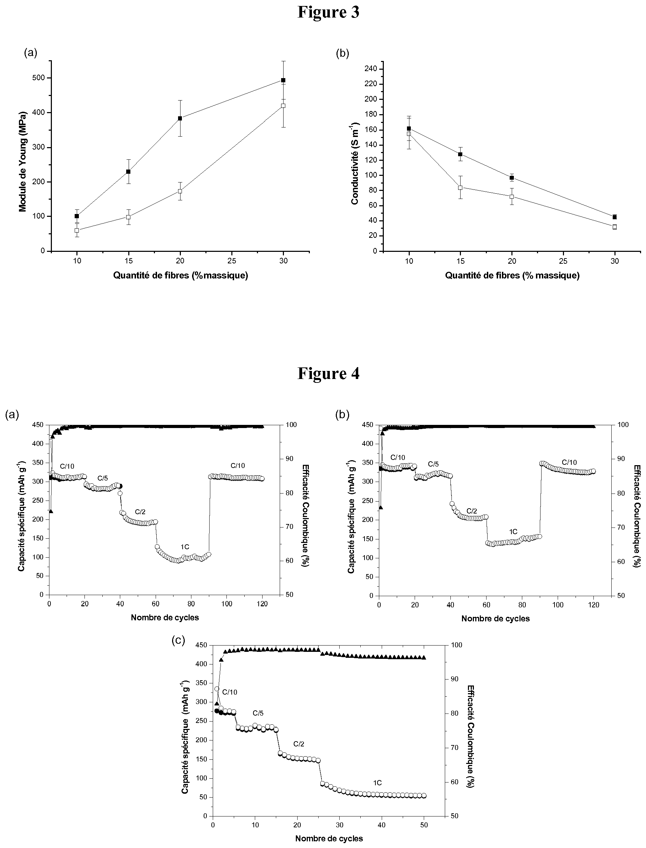

Des mesures de résistance à la traction (réalisées en utilisant un instrument RSA3, TA Instrument, USA) et de conductivité électrique (test à quatre pointes, Jandel Universal Probe) ont ensuite été réalisées sur les électrodes ainsi préparées. Ces mesures sont reportées sur la figure 3 annexée. La figure 3a rapporte les résultats du test de résistance à la traction. Sur cette figure, le Module de Young (en MPa) est fonction de la teneur en fibres raffinées (en % massique). La courbe avec les carrés pleins correspond aux électrodes préparées en utilisant un mélange FBr/GP/CMC, alors que la courbe avec les carrés vides correspond aux électrodes préparées en utilisant un mélange FBr/GP. La figure 3b rapporte les résultats du test de conductivité électrique. Sur cette figure, la conductivité (en Sm⁻¹) est fonction de la teneur en fibres raffinées (en % massique). La courbe avec les carrés pleins correspond aux électrodes préparées en utilisant un mélange FBr/GP/CMC, alors que la courbe avec les carrés vides correspond aux électrodes préparées en utilisant un mélange FBr/GP.

Les mesures de résistance à la traction et de conductivité électrique ont mis en évidence l'effet de la composition de l'électrode sur ses propriétés mécaniques, notamment le module d'Young qui augmente avec la fraction massique en fibres, et la conductivité électrique, qui à l'inverse diminue. L'ajout de CMC induit une amélioration à la fois du module de Young et de la conductivité électrique.

Des tests électrochimiques, réalisés en demi-pile en utilisant une feuille de lithium comme contre-électrode, une solution d'hexafluorure phosphate de lithium (1 mol/L) dans du EC:DEC (1 :1) comme électrolyte et une anode composée par des fibres raffinées à 95 °SR (10 % en masse) et de la GP (90% en masse), avec ou sans CMC ont également été réalisés. A titre comparatif, des mesures de capacité spécifiques ont également été réalisées en demi-pile selon un montage similaire dans lequel l'anode conforme à l'invention a été remplacée par une anode préparée en remplaçant les fibres de cellulose raffinées par un liant standard, le PVdF. L'anode GP/PVdF a été préparée par dépôt d'un mélange à base de NMP contenant 10 % en masse de PVdF et 90 % en masse de GP (par rapport a la masse sèche totale) sur une feuille de cuivre et ensuite évaporation du solvant NMP.

Les mesures de capacité spécifiques correspondantes sont reportées sur la figure 4 annexée sur laquelle la capacité spécifique (en mAhg⁻¹) et l'efficacité coulombique (en %) sont fonction du nombre de cycles. La figure 4a correspond aux mesures effectuées sur la demi-pile comportant une anode FBr/GP sans CMC, la figure 4b aux mesures effectuées sur la demi-pile comportant une anode FBr/GP avec CMC et la figure 4c aux mesures effectuées sur la demi-pile comportant une anode GP/PVdF non conforme à l'invention. Sur ces figures, les courbes avec les cercles pleins correspondent aux valeurs mesurées lors de la charge, les courbes avec les cercles vides aux valeurs mesurées lors de la décharge et les courbes avec les triangles pleins aux valeurs d'efficacité coulombique.

Ces résultats montrent que les anodes FBr/GP atteignent des capacités spécifiques (figure 4a) pour les anodes sans CMC et (figure 4b) pour les anodes avec CMC comparables à celle des anodes utilisant un liant standard (PVdF), (figure 4c), soit environ 300-350 mAh/g.

### Exemple 3

### Préparation d'électrodes positives (cathodes) et caractérisations

Pour améliorer l'affinité entre le noir de carbone (CB) et les fibres de cellulose raffinées (FBr, 95°SR) des suspensions de CB et FBr ont été préalablement traitées :
- Le CB a été traité avec de la CMC en ajoutant entre 0 et 2 % en masse de CMC à une suspension de CB à 2 % en masse. Les concentrations sont données par rapport à la masse totale de la suspension.
- Les FBr ont été traitées avec du sulfate d'aluminium hydraté en ajoutant entre 0 et 1 % en masse de sulfate d'aluminium hydraté à une suspension de FBr avec une concentration de 2 % en masse. Les concentrations sont données par rapport à la masse totale de la suspension.

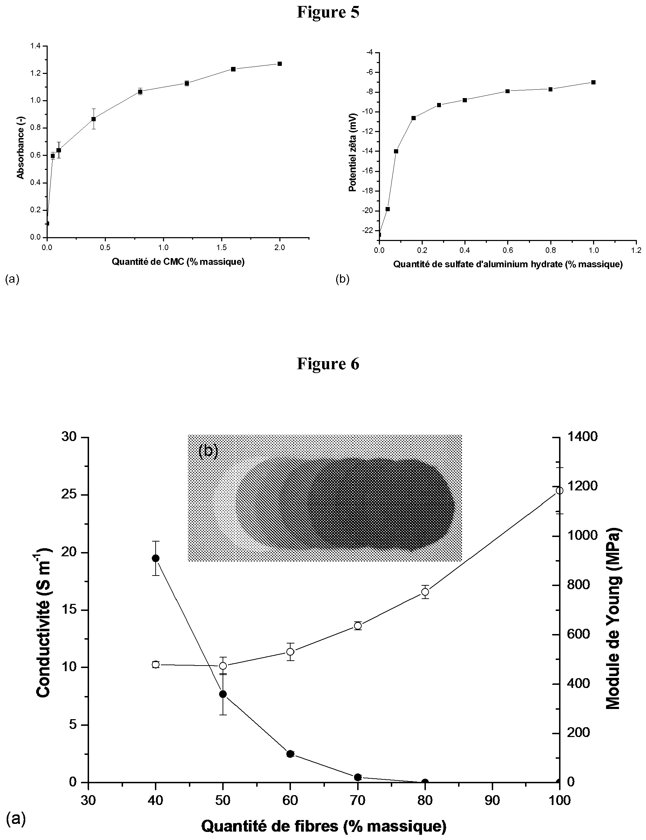

L'absorbance de chacune des suspensions à base de CB et de CMC ainsi préparées a été mesurée à l'aide d'un spectromètre-UV (Unicam UV5 Serie, Thermo Spectronic, Cambridge UK). Les résultats sont reportés sur la figure 5a annexée sur laquelle l'absorbance (en unité arbitraire) est fonction de la quantité de CMC dans la suspension (en % massique). Cette figure montre l'effet dispersant de la CMC sur le CB dû à l'adsorption de la CMC sur le CB.

On a également déterminé la charge électrique et calculé le potentiel zêta des fibres FBr de chacune des suspensions à base de FBr traitées par le sulfate d'aluminium hydraté, à l'aide d'un zêta-mètre (SZP 04 Mutek). Les résultats obtenus sont reportés sur la figure 5b annexée sur laquelle le potentiel zêta (mV) est fonction de la quantité de sulfate d'aluminium hydraté dans la suspension (en % massique). Cette figure montre la neutralisation des charges anioniques à la surface de FBr suite à l'ajout de sulfate d'aluminium hydraté.

Ces deux effets couplés permettent d'optimiser la fixation du CB sur les fibres de cellulose lors du mélange des suspensions de CB traité avec la CMC et des FBr traitées avec le sulfate d'aluminium hydraté.

Les suspensions de CB-CMC et de FBr-Sulfate d'aluminium hydraté ont ensuite été mélangées en des quantités respectives variant de 0 à 60 % massique de suspension de CB/CMC et de 100 à 40 % massique de suspension FBr/sulfate d'aluminium hydraté.

Des papiers composites flexibles CB-CMC/FBr-sulfate d'aluminium hydraté ont ensuite été préparés à partir de chacun des mélanges entre CB/CMC et FBr/sulfate d'aluminium hydraté en utilisant le montage décrit ci-dessus à l'exemple 2 et à la figure 2, en utilisant une toile de filtration en nylon avec un seuil de filtration de 33 µm, suivie d'un pressage et d'un séchage sous vide (10 minutes à 90°C).

Chacun des papiers composites ainsi préparés a ensuite été évalué du point de vue de sa résistance à la traction et de sa conductivité électrique comme décrit également ci-dessus à l'exemple 2.

La figure 6 annexée rapporte les résultats obtenus et donne (figure 6a) la conductivité (en Sm⁻¹) et le Module de Young (en MPa) en fonction de la teneur en fibres FBr (en % massique). Sur cette figure, la courbe avec les cercles pleins correspond à l'évolution de la conductivité alors que la courbe avec les cercles vides correspond à l'évolution du module de Young. Une photographie de chacun des papiers composites est donnée par la figure 6b.

La figure 6 montre que l'amélioration de la fixation du CB sur les fibres de cellulose lors du mélange des suspensions de CB traité avec la CMC et des FBr traitées avec le sulfate d'aluminium hydraté a un effet direct sur la conductivité des papiers composites obtenus par filtration des mélanges de CB-CMC/FBr-sulfate d'aluminium hydraté. Les papiers composites obtenus avec FBr et CB n'ayant pas été préalablement traités avec le sulfate d'aluminium hydraté et la CMC donnent des conductivités quasi nulles.

Des cathodes flexible ont ensuite été préparées à partir d'un mélange de CB/CMC/FBr/sulfate d'aluminium hydraté (CB 60 %, FBr 40 %) auquel on a rajouté une suspension de matériau actif d'électrode (suspension à 2 % en masse de LiFePO₄ dans l'eau) à raison de 40 % en masse de mélanges CB-CMC/FBr-sulfate d'aluminium hydraté pour 60 % en masse de suspension de matériau actif d'électrode en utilisant le montage décrit ci-dessus à l'exemple 2 et à la figure 2, en utilisant une toile de filtration en nylon avec un seuil de filtration de 33 µm, suivie d'un pressage et d'un séchage sous vide (10 minutes à 90°C).

Les cathodes obtenues montrent des propriétés mécaniques (résistance mécanique, flexibilité,...) similaires à celles des anodes préparées dans l'exemple 2.

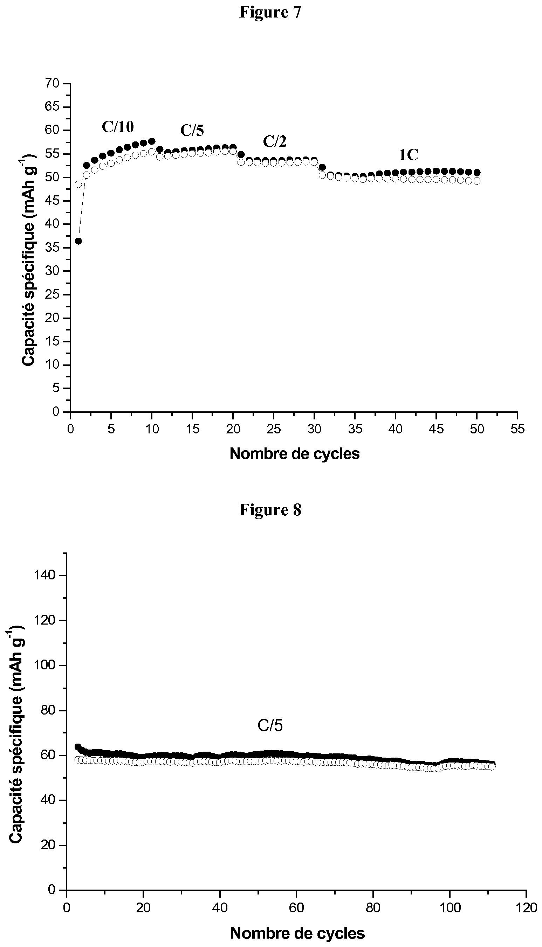

Des tests électrochimiques ont été réalisés en demi-pile en utilisant une feuille de lithium comme contre-électrode et une solution d'hexafluoro phosphate de lithium (1 mol/L) dans du EC:DEC (1 :1) comme électrolyte. Les résultats de ces tests électrochimiques sont reportés sur la figure 7 annexée sur laquelle la capacité spécifique (en mAhg⁻¹) est fonction du nombre de cycles. Sur cette figure, les courbes avec les cercles vides correspondent aux mesures effectuées pendant la décharge et les cercles pleins aux mesures effectuées pendant la charge, le calcul étant fait par rapport à la masse de matériau actif d'électrode.

Ces résultats montrent que les cathodes préparées selon la procédure mentionnée ci-dessus ont : une capacité spécifique d'environ 55 mAh/g (par rapport à la masse de matériau actif LiFePO₄), cette capacité spécifique étant peu affectée par le courant de charge/décharge. La résistance au cyclage est, quant à elle, d'au moins 150 cycles à C/2.

### Exemple 4

### Préparation d'une batterie complète et caractérisation

Les électrodes préparées suivant les procédures illustrées dans les exemples 2 et 3 ont été utilisées pour la réalisation d'une batterie complète. L'anode et la cathode ont été préparées afin d'obtenir une composition finale des électrodes à l'état sec suivante :
- Anode FBr/GP/CMC : 10 % en masse de FBr, 90 % en masse de GP, et 1 % en masse de CMC, par rapport à la masse des fibres séchées ;- Cathode FBr/sulfate d'aluminium hydraté/CB/CMC/LiFePO₄: 40 % du mélange CB/CMC/FBr/sulfate d'aluminium hydraté, (mélange constitué de 60% en masse de CB et de 40% en masse de FBr) et de 60 % en masse de LiFePO₄ ;

Une feuille de papier imprégnée dans une solution d'hexafluoro phosphate de lithium (1 mol/L) dans du EC:DEC (1 :1) a été utilisée comme séparateur entre les deux électrodes.

La batterie a été réalisée par empilement des trois composants anode/séparateur/cathode dans une cellule de mesure rigide. L'adhésion entre l'anode, le séparateur et la cathode a été assurée par la pression exercée par les collecteurs de courant métalliques constituant la cellule de mesure.

Les résultats sont reportés sur la figure 8 annexée sur laquelle la capacité spécifique (en mAhg⁻¹) est fonction du nombre de cycles. Sur cette figure, les courbes avec les cercles vides correspondent aux mesures effectuées pendant la charge et les cercles pleins aux mesures effectuées pendant la décharge.

La figure 8 montre que la capacité spécifique de la batterie obtenue en utilisant une anode et une cathode préparée selon les procédures décrites dans les exemples 2 et 3 et une feuille de papier comme séparateur est de 60 mAh/g (calculée par rapport à la masse de substance active cathodique, notamment le LiFePO₄) avec un courant de charge/décharge de C/5. Cette valeur est comparable à la capacité spécifique obtenue avec des tests en demi-pile, ou la batterie modèle est constituée par la cathode, un séparateur en laine de roche et une feuille de lithium métallique. Ce qui prouve que l'assemblage d'une batterie en utilisant les électrodes développées dans la présente invention, un séparateur en papier et un électrolyte liquide permet d'atteindre des performance électrochimiques comparables à celles utilisant des demi-piles modèles utilisant du lithium métallique comme contre électrode.

## Revendications

1. Procédé de préparation d'une électrode flexible autosupportée comprenant au moins une matière active d'électrode, et au moins un liant, ledit procédé comportant au moins les étapes suivantes :
i) une étape de préparation d'une pâte aqueuse par dispersion d'un mélange de particules solides dans une phase aqueuse, ledit mélange de particules solides comprenant :
- au moins une matière active d'électrode, en une quantité variant de 50 à 98% en masse par rapport à la masse totale du mélange de particules solides,
- au moins un liant comprenant des fibres de cellulose raffinées, en une quantité variant de 2 à 50 % en masse par rapport à la masse totale du mélange de particules solides ;
ledit mélange de particules solides représentant au moins 0,02 % en masse de la masse totale de la pâte aqueuse ;
ii) une étape de filtration de la pâte aqueuse obtenue ci-dessus à l'étape i) sur une toile de filtration ;
iii) éventuellement une étape de pressage à l'état humide de la pâte aqueuse puis son transfert sur un feutre de séchage ;
iv) une étape de séchage pour obtenir une feuille d'électrode flexible sèche supportée par la toile de filtration ou par le feutre de séchage lorsque l'étape iii) a été réalisée ;
v) une étape de séparation entre la feuille d'électrode et la toile de filtration ou le feutre de séchage lorsque l'étape iii) a été réalisée, pour obtenir l'électrode flexible autosupportée.

2. Procédé selon la revendication 1, **caractérisé en ce que** les fibres de cellulose raffinées (FBr) sont obtenues selon un procédé de raffinage comportant les étapes suivantes :
a) une étape de dispersion, dans un milieu aqueux, de fibres de cellulose préalablement séchées, pour obtenir pâte de fibres de cellulose dans laquelle la teneur en fibres de cellulose varie de 1 à 15 % en masse par rapport à la masse totale de ladite pâte de fibres de cellulose ;
b) une étape de cisaillement de ladite pâte de fibres de cellulose, de sorte à obtenir des fibres de cellulose raffinées, c'est-à-dire des fibres de cellulose présentant un degré Schopper-Riegler variant de 30 à 95°SR.

3. Procédé selon la revendication 1 ou 2, **caractérisé en ce que** la quantité de fibres de celluloses utilisée lors de l'étape i) varie de 2 à 50 % en masse par rapport à la masse totale du mélange de particules solides.

4. Procédé selon l'une quelconque des revendications précédentes, **caractérisé en ce qu'**un agent anti-floculation des fibres est incorporé à la suspension aqueuse de l'étape i).

5. Procédé selon l'une quelconque des revendications précédentes, **caractérisé en ce que** la concentration massique du mélange de particules solides dans la suspension aqueuse à l'issue de l'étape i) varie de 0,02 à 5 %

6. Procédé selon l'une quelconque des revendications précédentes, **caractérisé en ce que** le seuil de filtration de l'étape ii) est de l'ordre de 1 à 100 µm.

7. Procédé selon l'une quelconque des revendications précédentes, **caractérisé en ce que** le degré de raffinage des fibres de cellulose raffinées (FBr) est d'au moins 30°SR.

8. Procédé selon la revendication 4, **caractérisé en ce que** l'agent anti-floculation est choisi parmi la carboxyméthylcellulose (CMC), l'amidon et l'un de leurs mélanges.

9. Procédé selon l'une quelconque des revendications précédentes, **caractérisé en ce que** la suspension aqueuse de l'étape i) renferme en outre au moins un agent générant une conductivité électronique.

10. Procédé selon la revendication 9, **caractérisé en ce que** l'agent générant une conductivité électronique est choisi parmi le noir de carbone, le carbone SP, le noir d'acétylène, les fibres et nanofibres de carbone, les nanotubes de carbone, les particules métalliques, et l'un de leurs mélanges.

11. Procédé selon l'une quelconque des revendications 4 à 10, **caractérisé en ce que** l'agent anti-floculation des fibres représente de 0,01 à 10 % en masse par rapport à la masse totale de la pâte aqueuse de l'étape i).

12. Electrode flexible autosupportée obtenue par la mise en oeuvre du procédé tel que défini à l'une quelconque des revendications 1 à 11, **caractérisée en ce qu'**elle comprend au moins une matière active d'électrode, éventuellement au moins un agent générant une conductivité électrique, éventuellement un agent anti-floculation des fibres et au moins un liant comprenant des fibres de cellulose raffinées (FBr) emprisonnant ladite matière active d'électrode.

13. Electrode selon la revendication 12, **caractérisée en ce qu'**elle est une électrode positive et que la matière active est choisie parmi LiₓMn_{y}O₄ (0<x<2, 0<y<2 et x+y=3), LiCoO₂, LiMPO₄, (M = Fe, Mn, Co, Ni), LiAlₓCo_{y}Ni_{z}O₂ (0<x<1, 0<y<1, 0<z<1 and x+y+z=1) et LiNi_{(1-y)}Co_{y}O₂ (0≤y≤1).

14. Electrode selon la revendication 12, **caractérisée en ce qu'**elle est une électrode négative et **en ce que** la matière active est choisie parmi : le graphite, le carbone dur, le carbone mou et les alliages métallique Li_{Y}M (1<y<5 et M = Mn, Sn, Pb, Si, In, Ti).

15. Electrode selon l'une quelconque des revendications 12 à 14, **caractérisée en ce qu'**elle a une épaisseur variant de 50 à 300 µm.

16. Batterie lithium-ion flexible comprenant au moins une électrode négative et/ou au moins une électrode positive entre lesquelles est placé un électrolyte solide ou un séparateur imprégné par un électrolyte liquide, **caractérisée en ce que** l'électrode positive et/ou l'électrode négative est une électrode telle que définie à la revendication 12.

17. Batterie selon la revendication 16, **caractérisée en ce que** chacune des électrodes est une électrode flexible autosupportée telle que définie à la revendication 12, lesdites électrodes étant séparées l'une de l'autre par une feuille de papier imprégnée d'électrolyte liquide.

## Patentansprüche

1. Verfahren zur Herstellung einer flexiblen selbstgetragenen Elektrode, umfassend mindestens ein aktives Elektrodenmaterial und mindestens ein Bindemittel, wobei das Verfahren mindestens die nachfolgenden Schritte umfasst:
i) Herstellen einer wässrigen Paste durch Dispergieren einer Festpartikelmischung in einer wässrigen Phase, wobei die Festpartikelmischung umfasst:
- mindestens ein aktives Elektrodenmaterial in einer Menge zwischen 50
- 98 Masse-% bezogen auf die Gesamtmasse der Festpartikelmischung,
- mindestens ein Bindemittel, umfassend veredelte Cellulosefasern, in einer Menge zwischen 2 - 50 Masse-% bezogen auf die Gesamtmasse der Festpartikelmischung,
wobei die Festpartikelmischung mindestens 0,02 Masse-% der Gesamtmasse der wässrigen paste darstellt;
ii) Filtrieren der aus dem obigen Schritt i) resultierenden wässrigen Paste auf einem Filtrationsgewebe;
iii) ggf. Feuchtpressen der wässrigen Paste, gefolgt durch deren Überführung auf einen Trocknungsfilz;
iv) Trocknen zur Herstellung einer trockenen, flexiblen Blechelektrode, die vom Filtrationsgewebe oder ggf. nach erfolgtem Schritt iii) dem Trocknungsfilz getragen wird;
v) Separieren der Blechelektrode und des Filtrationsgewebes bzw. des Trocknungsfilzes (ggf. nach erfolgtem Schritt iii), um die flexible selbstgetragene Elektrode herzustellen.

2. Verfahren nach Anspruch 1, **dadurch gekennzeichnet, dass** die veredelten Cellulosefasern (FBr) sich aus einem Veredelungsverfahren ergeben, das die nachfolgenden Schritte umfasst:
a) Dispergieren vorher getrockneter Cellulosefasern in einem wässrigen Medium, um eine Paste aus Cellulosefasern herzustellen, bei der der Cellulosefasergehalt zwischen 1 - 15 Masse-% bezogen auf die Gesamtmasse der Cellulosefaserpaste liegt;
b) Scheren der Cellulosefaserpaste, um veredelte Cellulosefasern, d.h. Cellulosefasern mit einem Schopper-Riegler-Wert von 30 - 95 ° SR, zu ergeben.

3. Verfahren nach Anspruch 1 oder 2, **dadurch gekennzeichnet, dass** die Menge der im Schritt i) eingesetzten Cellulosefasern zwischen 2 - 50 Masse-% bezogen auf die Gesamtmasse der Festpartikelmischung liegt.

4. Verfahren nach einem der vorstehenden Ansprüche, **dadurch gekennzeichnet, dass** ein Antiflockungsmittel für die Fasern in die wässrige Suspension des Schritts i) aufgenommen wird.

5. Verfahren nach einem der vorstehenden Ansprüche, **dadurch gekennzeichnet, dass** die Massenkonzentration der Festpartikelmischung in der wässrigen Suspension zum Abschluss des Schritts i) zwischen 0,02 - 5 % liegt.

6. Verfahren nach einem der vorstehenden Ansprüche, **dadurch gekennzeichnet, dass** die Filtrationsschwelle des Schritts ii) auf der Größenordnung von 1 - 100 µm liegt.

7. Verfahren nach einem der vorstehenden Ansprüche, **dadurch gekennzeichnet, dass** der Veredelungsgrad der FBr mindestens 30 °SR beträgt.

8. Verfahren nach Anspruch 4, **dadurch gekennzeichnet, dass** das Antiflockungsmittel aus Carboxymethylcelllose (CMC), Stärke und einer Mischung davon gewählt ist.

9. Verfahren nach einem der vorstehenden Ansprüche, **dadurch gekennzeichnet, dass** die wässrige Suspension des Schritts i) ferner mindestens ein Mittel enthält, das eine elektrische Leitfähigkeit erzeugt.

10. Verfahren nach Anspruch 9, **dadurch gekennzeichnet, dass** das Mittel, da seine elektronische Leitfähigkeit erzeugt, aus der nachfolgenden Gruppe gewählt ist: Ruß, Kohlenstoff SP, Acetylenschwarz, Kohlenstofffasern und -nanofasern, Kohlenstoffnanoröhrchen, Metallpartikel und Mischungen davon.

11. Verfahren nach einem der Ansprüche 4 - 10, **dadurch gekennzeichnet, dass** das Antiflockungsmittel für die Fasern 0,01 - 10 Masse-% bezogen auf die Gesamtmasse der wässrigen Paste des Schritts i) darstellt.

12. Selbstgetragene flexible Elektrode, die aus dem Verfahren nach einem der Ansprüche 1 - 11 resultiert, **dadurch gekennzeichnet, dass** sie mindestens ein aktives Elektrodenmaterial, ggf mindestens ein Mittel, das eine elektrische Leitfähigkeit erzeugt, ggf. ein Antiflockungsmittel für die Fasern und mindestens ein Bindemittel, das FBr umfasst, die das aktive Elektrodenmaterial enthalten, umfasst.

13. Elektrode nach Anspruch 12, **dadurch gekennzeichnet, dass** sie eine positive Elektrode ist, und dass das aktive Material aus der nachfolgenden Gruppe gewählt ist: LiₓMn_{y}O₄ (0<x<2, 0<y<2 und x+y=3), LiCoO₂, LiMPO₄, (M = Fe, Mn, Co, Ni), LiAlₓ Co_{y}Ni_{z}O₂ (0<x<1, 0<y< 1, 0<z< 1 und x+y+z= 1) und LiNi_{(i-y)}Co_{y}O₂ (0≤y≤1).

14. Elektrode nach Anspruch 12, **dadurch gekennzeichnet, dass** es sich dabei um eine negative Elektrode handelt, und dass das aktive Material aus der nachfolgenden Gruppe gewählt ist: Graphit, Hartkohlenstoff, Weichkohlenstoff sowie die Metallegierungen Li_{Y}M (<y<5 und M = Mn, Sn, Pb, Si, In, Ti).

15. Elektrode nach einem der Ansprüche 12 - 14, **dadurch gekennzeichnet, dass** sie eine Dicke zwischen 50 und 300 µm aufweist.

16. Flexibler Lithium-Ionen-Akku, umfassend mindestens eine negative Elektrode und/oder mindestens eine positive Elektrode, zwischen denen eine feste Elektrode oder ein durch einen flüssigen Elektrolyten getränkter Separator angeordnet ist, **dadurch gekennzeichnet, dass** die positive Elektrode und/oder die negative Elektrode eine Elektrode nach Anspruch 12 ist.

17. Akku nach Anspruch 16, **dadurch gekennzeichnet, dass** jede der Elektroden eine flexible selbstgetragene Elektrode nach Anspruch 12 ist, wobei die Elektroden durch ein mit einem flüssigen Elektrolyten getränkten Papierblatt getrennt sind.

## Claims

1. Method for preparing a self-supporting flexible electrode comprising at least one active electrode material, and at least one binder, said method comprising at least the following steps:
i) a step of preparation of an aqueous paste by the dispersion of a mixture of solid particles in an aqueous phase, said mixture of solid particles comprising:
- at least one active electrode material, in a quantity varying from 50 to 98% by weight relative to the total weight of the mixture of solid particles,
- at least one binder comprising refined cellulose fibres, in a quantity varying from 2 to 50% by weight relative to the total weight of the mixture of solid particles;
said mixture of solid particles representing at least 0.02% by weight of the total weight of the aqueous paste;
ii) a step of filtration of the aqueous paste obtained above in the step i) on a filtration cloth;
iii) optionally, a step of pressing, in the wet state, of the aqueous paste followed by its transfer onto a drying felt;
iv) a drying step to obtain a sheet of dry flexible electrode supported by the filtration cloth or by the drying felt when the step iii) has been carried out;
v) a step of separation between the sheet of electrode and the filtration cloth or the drying felt when the step iii) has been carried out, to obtain the self-supporting flexible electrode.

2. Method according to Claim 1, **characterized in that** the refined cellulose fibres (FBr) are obtained by a refining method comprising the following steps:
a) a step of dispersion, in an aqueous medium, of previously dried cellulose fibres, to obtain a cellulose fibre paste in which the cellulose fibre content varies from 1 to 15% by weight relative to the total weight of said cellulose fibre paste;
b) a step of shearing of said cellulose fibre paste, so as to obtain refined cellulose fibres, that is to say cellulose fibres exhibiting a Schopper-Riegler degree varying from 30 to 95°SR.

3. Method according to Claim 1 or 2, **characterized in that** the quantity of cellulose fibres used in the step i) varies from 2 to 50% by weight relative to the total weight of the mixture of solid particles.

4. Method according to any one of the preceding claims, **characterized in that** an anti-flocculation agent for the fibres is incorporated in the aqueous suspension of the step i).

5. Method according to any one of the preceding claims, **characterized in that** the concentration by weight of the mixture of solid particles in the aqueous suspension on completion of the step i) varies from 0.02 to 5%.

6. Method according to any one of the preceding claims, **characterized in that** the filtration threshold of the step ii) is of the order of 1 to 100 µm.

7. Method according to any one of the preceding claims, **characterized in that** the degree of refining of the refined cellulose fibres (FBr) is at least 30°SR.

8. Method according to Claim 4, **characterized in that** the anti-flocculation agent is chosen from carboxymethylcellulose (CMC), starch and one of their mixtures.

9. Method according to any one of the preceding claims, **characterized in that** the aqueous suspension of the step i) also contains at least one agent generating an electronic conductivity.

10. Method according to Claim 9, **characterized in that** the agent generating an electronic conductivity is chosen from carbon black, carbon SP, acetylene black, carbon fibres and nanofibres, carbon nanotubes, metal particles, and one of their mixtures.

11. Method according to any one of Claims 4 to 10, **characterized in that** the anti-flocculation agent for the fibres represents 0.01 to 10% by weight relative to the total weight of the aqueous paste of the step i).

12. Self-supporting flexible electrode obtained by the implementation of the method as defined in any one of Claims 1 to 11, **characterized in that** it comprises at least one active electrode material, possibly at least one agent generating an electrical conductivity, possibly an anti-flocculation agent for the fibres and at least one binder comprising refined cellulose fibres (FBr) imprisoning said active electrode material.

13. Electrode according to Claim 12, **characterized in that** it is a positive electrode and that the active material is chosen from LiₓMn_{y}O₄ (0 < x < 2, 0 < y < 2 and x + y = 3), LiCoO₂, LiMPO₄, (M = Fe, Mn, Co, Ni), LiAlₓCo_{y}Ni_{z}O₂ (0 < x < 1, 0 < y < 1, 0 < z < 1 and x + y + z = 1) and LiNi_{(1-y)}Co_{y}O₂ (0 ≤ y ≤ 1).

14. Electrode according to Claim 12, **characterized in that** it is a negative electrode and **in that** the active material is chosen from: graphite, hard carbon, soft carbon and the metal alloys Li_{Y}M (1 < y < 5 and M = Mn, Sn, Pb, Si, In, Ti).

15. Electrode according to any one of Claims 12 to 14, **characterized in that** it has a thickness varying from 50 to 300 µm.

16. Flexible lithium-ion battery comprising at least one negative electrode and/or at least one positive electrode between which is placed a solid electrolyte or a separator impregnated with a liquid electrolyte, **characterized in that** the positive electrode and/or the negative electrode is an electrode as defined in Claim 12.

17. Battery according to Claim 16, **characterized in that** each of the electrodes is a self-supporting flexible electrode as defined in Claim 12, said electrodes being separated from one another by a sheet of paper impregnated with liquid electrolyte.
